Europäisches Patentamt

European Patent Office

Office européen des brevets

(19)

(11) Veröffentlichungsnummer: **0 112 795**
**B1**

(12) ## EUROPÄISCHE PATENTSCHRIFT

(45) Veröffentlichungstag der Patentschrift:
03.02.88

(51) Int. Cl.⁴: **B 60 N 3/04**

(21) Anmeldenummer: **83710072.6**

(22) Anmeldetag: **14.10.83**

(54) **Fussraummatte aus Gummi, Kunststoff o. dgl. für Kraftfahrzeuge.**

(30) Priorität: **26.11.82 DE 3243803**

(43) Veröffentlichungstag der Anmeldung:
**04.07.84 Patentblatt 84/27**

(45) Bekanntmachung des Hinweises auf die Patenterteilung:
**03.02.88 Patentblatt 88/5**

(84) Benannte Vertragsstaaten:
**AT BE CH FR GB LI NL SE**

(56) Entgegenhaltungen:
**DE-A-1 925 265**
**DE-A-2 256 610**
**US-A-2 032 114**
**US-A-3 858 269**
**US-A-4 340 633**

(73) Patentinhaber: **WEGU Gummi- und Kunststoffwerke Walter Dräbing KG, Mündener Strasse 31, D-3500 Kassel (DE)**

(72) Erfinder: **Tönnies, Herbert, Eichenweg 4, D-3512 Reinhardshagen (DE)**

(74) Vertreter: **Patentanwälte Dipl.- Ing. Rudolf Bibrach Dipl.- Ing. Elmar Rehberg, Pütterweg 6 Postfach 738, D-3400 Göttingen (DE)**

LIBER, STOCKHOLM 1988

## Beschreibung

Die Erfindung bezieht sich auf eine Fußraummatte aus Gummi, Kunststoff o. dgl. zum Auflegen auf textile Bodenbeläge in Kraftfahrzeugen, mit einem Mattenhauptkörper, der auf seiner dem textilen Bodenbelag zugekehrten Unterseite eine Vielzahl von in den Bodenbelag zumindest teilweise eindringende Noppen oder anderen Vorsprüngen aufweist, die in gegenseitigen Abständen über die Unterseite verteilt angeordnet sind. Derartige Fußraummatten dienen einerseits dem Schutze des textilen Bodenmaterials vor Verschmutzung und Eindringen von Feuchtigkeit, die beispielsweise im Winter in Form von an den Schuhen haftenden Schnees mit eingebracht wird, andererseits soll die Fußraummatte eine sichere und verläßliche Abstützung des Fußes beim Betätigen der Pedale bieten und damit auf dem textilen Bodenbelag unter möglichst großer Haftreibung aufliegen, so daß bei Krafteinwirkung ein Verrutschen der Matte verhindert wird.

Fußraummatten der angegebenen Art sind aus der DE-A-2 256 610 für den Verwendungszweck im Kraftfahrzeug bekannt. Diese weisen auf der Unterseite Vorsprünge in Form von Noppen auf, die pyramidenförmig gestaltet sind und eine Höhe von etwa 3 mm aufweisen. Der Abstand von Noppe zu Noppe beträgt etwa 10 bis 40 mm. Die Noppen sind ohne Zuordnung zu den Rippen auf de Oberseite des Mattenhauptkörpers angeordnet. Diese pyramidenförmigen Noppen enden z' 'ar in einer Spitze, dringen jedoch in den textilen Bodenbelag nur bis zu einem gewissen Grade ein, so daß sie dann bei Belastung, also beispielsweise beim schrägen Aufstemmen eines Fußes des Kraftfabrers auf die Matte leicht umbiegen und somit die Matte rutscht, d. h. die Haftreibung verlassen wird und in eine Gleitreibung übergeht. Diese bekannten Fußraummatten haben nur eine geringe Haftung bzw. ein geringes Haftvermögen bei Belastung. Dabei liegt die Hauptbelastungsrichtung nach vorn in Fahrtichtung des Kratfahrzeuges, jedoch treten auch Belastungen in entgegensetzter richtung sowie quer dazu auf.

Aus der US-A-43 40 633 sind Matten bekannt, die zur Schonung des Fußbodens unter Möbelstücke, insbesondere Stühle, gelegt werden, und die, auch nachträglich, rutschsicher gemacht werden sollen. Dazu werden auf einem Klebestreifen auf der der Klebefläche abgewandten Seite Noppen angeordnet. Dieser Klebestreifen kann unter beliebig geformten Matten angebracht werden, wodurch dann, aufgrund der am Klebestreifen angeordneten Noppen, eine erhöhte Rutschsicherheit der Matten gegeben ist. Die Noppen sind ebenfalls pyramidenförmig ausgebildet.

Aus der britischen Design-Application 10 04 517 ist eine Fußraummatte bekannt, bei der die Vorsprünge in Form von über die Mattenbreite durchgehenden Rippen vorgesehen sind. Es sind auf Abstand angeordnete relativ hoch gestaltete Rippen vorgesehen, die in der Hauptbetätigungsrichtung eine Widerstandsfläche aufweisen und in der entgegengesetzten Richtung dazu mit einem flachen Übergang in das Material des Mattenhauptkörpers verlaufen. Zwischen diesen auf Abstand angeordneten Rippen ist eine Mehrzahl ebenfalls parallel dazu verlaufender Rippen mit sehr viel kleinerer Höhe vorgesehen, die V-förmig aus dem Material des Mattenhauptkörpers abstehen. Diese Rippen nehmen praktisch die gesamte übrige Oberfläche der Unterseite des Mattenhauptkörpers ein. Sie sind nicht geeignet, in das textile Bodenmaterial einzudringen, sondern bilden gleichsam nur eine etwas größer gestaltete Oberflächenrauhigkeit. Diese bekannte Fußraummatte weist zwar eine relativ gute Haftung in der Hauptbetätigungsrichtung, also beim Einwirken von Kräften in Fahrtrichtung des Fahrzeuges auf. In entgegengesetzter Richtung hierzu ist die Matte sehr rutschfreudig. Gegen seitlich einwirkende Kräfte schließlich tritt kein nennenswerter Widerstand gegen Verrutschen auf. Diese Vorsprünge in Form über die Breite durchgehender Rippen sind auch insofern für die Herstellung derartiger Fußraummatten nachteilig, als dies die dreidimensionale Ausbildung eines Formunterteils erforderlich macht, in welchem in Form von Vertiefungen die Rippen mit seitlicher Begrenzung eingearbeitet sein müssen. Dies verteuert die Herstellung der Formen.

Es sind weiterhin Fußraummatten bekannt, die auf ihrer Unterseite Vorsprünge in Form eines keilförmigen Kreuzmusters aufweisen, bei dem dis sich kreuzenden Rippen runden oder pyramidenförmigen Querschnitt aufweisen. Eine solche Ausbildung zeigt das DE-U-19 31 813, wobei die dortige Fußraummatte im Sommerbetrieb mit ihrer wabenförmig ausgebildeten Struktur nach unten zeigend auf das textile Bodenmaterial aufgelegt wird. Diese wabenförmige Struktur bildet im Winterbetrieb die Oberseite der Fußraummatte, so daß hieraus schon erkennbar ist, daß diesbezüglich auf die Erreichung einer möglichst hohen Haftung der Matte gegen Verschieben und Verrutschen nicht abgestellt ist.

Der Erfindung liegt die Aufgabe zugrunde, ausgehend von einer Fußraummatte der eingangs beschriebenen Art eine möglichst große Rutschfestigkeit (Haftung) der Matte in den Beanspruchungsrichtungen zu erzielen.

Erfindungsgemäß wird dies dadurch erreicht, daß die Vorsprünge mehrere, etwa senkrecht bzw. nur in kleinem Anstellwinkel geneigt zur Senkrechten auf der Fläche des Mattenhauptkörpers abstehende Widerstandsflächen aufweisen, die etwa senkrecht zu den Beanspruchungsrichtungen angeordnet sind, und daß die Widerstandsflächen an den Vorsprüngen gegen Umbiegen der Vorsprünge unter Krafteinwirkung durch Anhäufungen von Vorsprungsmaterial mit allmählichem Übergang in die Unterseite des Mattenhauptkörpers abgestützt sind. Damit wird unter erstaunlicher Verbesserung der Haftung einer derart aufgelegten Fußraummatte auf einen textilen Belag den an sich gegensätzlichen Forderungen des besonders tiefen Eindringens der Vorsprünge in den textilen Belag einerseits, was nur durch besonders spitze Vorsprünge erreichbar ist, und der Verhinderung des Umbiegens derartiger Vorsprünge bei an der Matte angreifenden Verschiebekräften, was an sich nur durch besonders stumpfe Vorsprünge erreichbar ist, Rechnung getragen. Die gezielte Abstützung der Vorsprünge, ausgerichtet auf die Widerstandsflächen und die in diesen Flächen angreifenden Kräfte und die Vielzahl der abständig angeordneten Vorsprünge ist ursächlich für die erreichte Haftung. Die Widerstandsflächen lassen sich im einzelnen an den Vorsprüngen in ganz verschiedener Weise anbringen; wesentlich ist, daß jeder Vorsprung mindestens zwei Widerstandsflächen aufweist, die in der Regel in einem Winkel von 90° zueinander angeordnet sind, so daß ein Vorsprung die Haftung schon in mehrere Beanspruchungsrichtungen verbessert. Die größte Beanspruchung einer Fußraummatte findet in Fahrtrichtung statt, wenn der bereits sitzende Kraftfahrer durch Abstützen der Füße auf der Fußraummatte und Anlehnen des Rückens an die Rücklehne des Sitzes versucht, eine andere Sitzposition einzunehmen. In diesem Augenblick wirkt eine nach vorn gerichtete Schiebekraft auf die Fußraummatte. Beim Betätigen der Pedale können sich Beanspruchungskräfte nach vorn oder auch nach hinten an der Fußraummatte ergeben. Beim Einsteigen in das Kraftfahrzeug schließlich wirken seitliche Kräfte auf die Fußraummatte ein. Daneben müssen noch Kräfte aufgefangen werden, die sich nicht in diese drei Hauptrichtungen einordnen lassen; diese Kräfte sind aber in der Regel sehr viel geringer. Deshalb ist es schon sinnvoll, wenn die Widerstandsflächen etwa im rechten Winkel zueinander angeordnet und zu diesen Beanspruchungsrichtungen positioniert sind.

Bei der Erfindung werden folgende Merkmale Kombiniert:

a) Die Vorsprünge weisen mehrere, etwa senkrecht bzw. nur in kleinem Anstellwinkel $\alpha$ geneigt zur Senkrechten auf der Fläche des Mattenhauptkörpers abstehende Widerstandsflächen auf, die etwa parallel zur Beanspruchungsrichtung angeordnet sind.

b) Die benachbarten Widerstandsflächen stehen jeweils in einem Winkel von 90° oder kleiner als 90° zueinander

c) Die benachbarten Widerstandsflächen sind durch Anhäufug von Vorsprungsmaterial verbunden, um bei horizontaler Belastung einen widerstandssteifen Vorsprung zu bilden.

d) Alle sich bildende Flächen der Materialanhäufung, soweit sie nicht als Widerstandsflächen in engerem gilt, bilden zu den Widerstandsflächen einen Flankenwinkel $\beta$ kleiner als 90°.

e) Die Größe, die Lage und die Anzahl der Vorsprünge wird derart begrenzt, daß die Vorsprünge bei einer normalen spezifischen Flächenbelastung von maximal $0,02 \text{ kg/cm}^2$ (vertikal zur Mattenebene wirkend) um mindestens ein Drittel der Höhe der Vorsprünge in den darunter liegenden textilen Bodenbelag eindringt.

Die Vorsprünge weisen zweckmäßig einen Flankenwinkel kleiner als 60° zwischen der Widerstandsfläche und der Anhäufung von Vorsprungsmaterial und einen kleinen Anstellwinkel - insbesondere kleiner als 10° auf. Damit ist einerseits noch die Gewähr dafür gegeben, daß die Vorsprünge ausreichend tief in das textile Material eindringen können, insbesondere dann, wenn sie zusätzlich zu dem Gewicht der Fußraummatte selbst mit einer weiteren Kraft, beispielsweise dem Gewicht des Fußes o. dgl. belastet werden. Andererseits lassen sich derartige Vorsprünge noch gut entformen, d. h. die Herstellung der Fußraummatte bereitet keine nennenswerte Schwierigkeiten.

Die Vorsprünge können zeilen- und/oder reihenweise ausgerichtet oder versetzt zueinander angeordnet sein. Dies kann in gleicher oder unterschiedlicher Weise von Zeile zu Zeile oder auch von Reihe zu Reihe durchgeführt werden. Die Anordnung ist auf jeden Fall so zu wählen, daß eine ausreichend große Eindringtiefe der Vorsprünge in den textilen Belag erzielt wird, also eine entsprechend hohe Flächenpressung mit entsprechend großen Abständen zwischen den Vorsprüngen. Es ist auch möglich, auf der Unterseite des Mattenhauptkörpers die Vorsprünge in gleicher Formgebung jedoch unterschiedlich orientiert vorzusehen um den unterschiedlichen Beanspruchungsrichtungen Rechnung zu tragen. Diese unterschiedliche Orientierung ist besonders vorteilhaft, weil die Form des Vorsprunges diesbezüglich nicht verändert werden muß und trotzdem die Wirkungen in den verschiedenen Beanspruchungsrichtungen erzielt werden. Die gegen ein Verrutschen der Fußraummatte in Fahrtrichtung schützenden Widerstandsflächen der Vorsprünge können in größerer Anzahl und/oder mit grösserer Einzelfläche gegenüber den anderen Widerstandsflächen vorgesehen sein, um eine bevorzugte Richtung, nämlich in der Hauptbeanspruchungsrichtung zu haben.

Die Vorsprünge können an sich ganz verschiedenartig ausgebildet sein, wenn sie nur mindestens zwei Widerstandsflächen aufweisen. Besonders vorteilhaft können die Vorsprünge stern-oder T-förmig ausgebildet sein, wobei dann zweckmäßig die eine Widerstandsfläche mit ihrem Vorsprungsmaterial die Abstützung der um 90° versetzt dazu angeordneten anderen Widerstandsfläche und umgekehrt bildet. Dies bedeutet, daß die betreffenden Teile der Vorsprünge jeweils Doppelfunktion erfüllen: Zum einen bilden sie Widerstandsflächen, zum anderen erfüllen sie Abstützfunktion.

Es ist auch möglich, an einem Vorsprung mehrere parallel zueinander angeordnete Widerstandsflächen vorzusehen, die insbesondere in der Höhe gegeneinander versetzt angeordnet sein können, damit diese Widerstandsflächen bei unterschiedlicher Eindringtiefe der Vorsprünge jeweils wirksam werden. Die Vorsprünge enden auf ihrer der Unterseite des Mattenhauptkörpers abgekehrten Seite in einer Spitze oder in einer Kante, sind also nicht abgerundet und nicht abgeflacht ausgebildet, damit das Eindringen in die Oberfläche des textilen Belages begünstigt wird.

Die Vorsprünge auf der Unterseite des Mattenhauptkörpers sind vorzugsweise dort angeordnet, wo sich auf der Oberseite des Mattenhauptkörpers Rippen oder sonstige Erhebungen befinden, damit die vom Fuß auf die Matte ausgeübten Kräfte unmittelbar und ohne Durchbiegung des Mattenhauptkörpers auf die Vorsprünge übertragen werden, die dann noch tiefer in die Oberfläche des textilen Materials einsinken und sich dabei verhaken bzw. verkrallen, so daß die erhöhte Haftung und Rutschsicherheit resultiert.

Ausführungsbeispiele der Erfindung werden anhand der Zeichnung weiter beschrieben. Es zeigen:

Fig. 1 einen Querschnitt durch einen Teil einer Fußraummatte in der Belastungssituation,

Fig. 2 die Draufsicht auf den Ausschnitt gemäß Fig. 1,

Fig. 3 die Drausicht auf einen Vorsprung auf der Unterseite des Mattenhauptkörpers,

Fig. 4 eine Seitenansicht des Vorsprungs gemäß Fig. 3,

Fig. 5 die Draufsicht auf einen anders gestalteten Vorsprung,

Fig. 6 eine Seitenansicht des Vorsprunges gemäß Fig. 5,

Fig. 7 eine weitere Ausführungsform des Vorsprunges,

Fig. 8 eine Seitenansicht des Vorsprunges gemäß Fig. 7,

Fig. 9 die Draufsicht auf eine weitere Ausführungsmöglichkeit eines Vorsprungs,

Fig. 10 eine Seitenansicht auf den Vorsprung gemäß Fig. 9,

Fig. 11 eine weitere Ausführungsmöglichkeit des Vorsprungs,

Fig. 12 eine Seitenansicht des Vorsprunges,

Fig. 13 die Draufsicht auf einen gezahnten Vorsprung,

Fig. 14 eine Seitenansicht des Vorsprungs gemäß Fig. 13,

Fig. 15 die Draufsicht auf einen sternförmigen Vorsprung,

Fig. 16 eine zugehörige Seitenansicht,

Fig. 17 die Draufsicht auf einen T-förmigen Vorsprung,

Fig. 18 eine Seitenansicht des Vorsprungs gemäß Fig. 17,

Fig. 19 einen Ausschnitt aus der Unterseite einer Matte zur Darstellung der Anordnung der Vorsprünge in ihrer gegenseitigen Lage,

Fig. 20 eine zugeörige Seitenansicht,

Fig. 21 eine andere Anordnungsmöglichkeit der Vorsprünge,

Fig. 22 eine Seitenansicht der Anordnung der Vorsprünge gemäß Fig. 21,

Fig. 23 den Schnitt gemäß der Linie XXIII-XXIII in Fig. 24 mit Dastellung der Erhebungen auf der Oberseite des Mattenhauptkörpers und

Fig. 24 die Draufsicht auf einen Ausschnitt einer Matte.

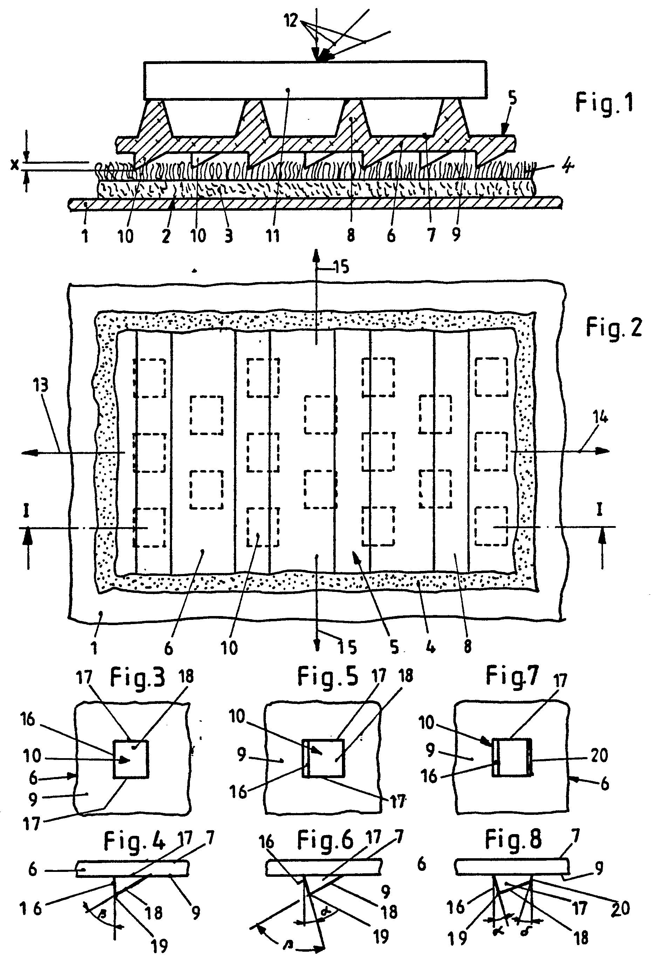

In den Fig. 1 und 2 ist der als Stahlpreßteil hergestellte Fahrzeugboden 1 dargestellt. Die räumlich ausgebildete Kontur dieses Fahrzeugbodens 1 wird mit einem textilen Belag 2 ausgelegt, der beispielsweise aus einer elastischen Trägerschicht 3 und einer Textilbeschichtung 4 bestehen kann, die in Form von Schlingen, aufgeschnittenen Schlingen, Fasern o. dgl. ausgebildet sein kann. Der textile Belag 2 wird auf den Fahrzeugboden 1 vorzugsweise aufgeklebt. Auf diesen textilen Belag 2 wird nun eine Fußraummatte 5 aufgelegt, die einen durchgehenden Mattenhauptkörper 6 aufweist, auf dessen Oberseite 7 Erhebungen 8, meist in Form von durchgehenden Rippen o. dgl. vorgesehen sind. Der Mattenhauptkörper 6 weist eine Unterseite 9 auf, von der einzelne Vorsprünge 10 nach unten abstehen und bereits aufgrund des Eigengewichts der Fußraummatte 5 um ein gewisses Maß in die Oberfläche der Textilbeschichtung 4 eindringen. Rein schematisch ist ein Gewicht 11 angedeutet, welches dem Gewicht bzw. dem anteiligen Gewicht eines Beins einer Person entspricht, die im Fahrzeug sitzt. Zusätzlich zu der Gewichtskraft des Beins können auf die Fußraummatte 5 noch Abstützkräfte wirken, die durch die Pfeile 12 angedeutet sind. Hierdurch sinkt die Fußraummatte 5 um ein gewisses Maß x mit ihren Vorsprüngen 10 in die Textilbeschichtung 4 des textilen Belages 2 ein. Pfeil 13 in Fig. 2 deutet die Hauptbeanspruchungsrichtung der Fußraummatte 5 an, die gleichzeitig mit der Fahrtrichtung des Kraftfahrzeuges bei Vorwärtsfahrt übereinstimmt. Pfeil 14 veranschaulicht die Gegenrichtung, während die Pfeile 15 die Richtungen angeben, in denen Querkräfte auf die Fußraummatte 5 einwirken können, wie es beispielsweise beim Einsteigen in ein Kraftfahrzeug der Fall ist.

Die Fig. 3 und 4 zeigen eine erste Ausbildungsform eines einzelnen Vorsprungs 10. Dieser Vorsprung 10 erhebt sich mit etwa quadratischer Ansatzfläche von der Unterseite 9 des Mattenhauptkörpers 6 und weist drei Widerstandsflächen 16 und 17 auf, wobei die Widerstandsfläche 16 sich etwa senkrecht auf der Fläche des Mattenhauptkörpers 6 erhebt und somit selbst eine rechteckige Fläche darstellt, während die Widerstandsflächen 17 dreieckigen Umriß aufweisen, wie aus Fig. 4 ersichtlich ist. Gleichsam auf der Rückseite der Widerstandsfläche 16 ist aus dem Material des Vorsprungs 10 eine Anhäufung 18 gebildet, die im Vergleich zur Widerstandsfläche 16 einen allmählichen Übergang in die Unterseite 9 des Mattenhauptkörpers 6 darstellt. Diese Anhäufung 18 stützt damit die Widerstandsfläche 16 wirksam gegen Umbiegen des Vorsprunges 10 bei Belastung ab. Man erkennt aus Fig. 4, daß der Flankenwinkel β immer noch relativ spitz ausgebildet ist, so daß der Vorsprung 10 in einer Kante 19 endet, die leicht in die Textilbeschichtung 4 des textilen Belages 2 eindringen kann. Die Anordnung dieser Vorsprünge gemäß den Fig. 2 bis 4 zeigt an, daß die Widerstandsfläche 16 der Hauptbelastungsrichtung gemäß Pfeil 13 zugekehrt angeordnet ist, während die Widerstandsflächen 17 die Matte in den Richtungen gemäß den Pfeilen 15 quer dazu abstützen. Gegen nach rückwärts einwirkende Kräfte gemäß Pfeil 14 sind hier keine nennenswerten Widerstandsflächen vorgesehen.

Die Ausführungsform des einzelnen Vorsprungs 10 gemäß den Fig. 5 und 6 ist ähnlich derjenigen, gemäß den Fig. 3 und 4. Im Unterschied hierzu ist jedoch die Widerstandsfläche 16 nicht senkrecht auf der Unterseite 9 des Mattenhauptkörpers 6 angeordnet, sondern in einem relativ kleinen Anstellwinkel α, der auf jeden Fall unter 10° liegen sollte.

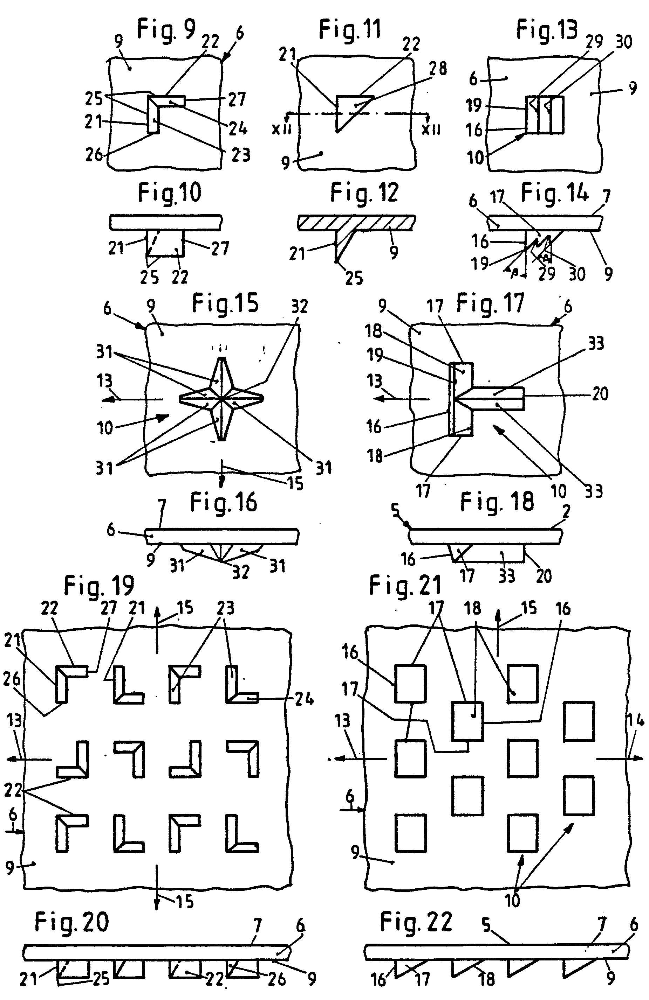

Die Ausführungsform nach der Fig. 7 und 8 zeigt einen Vorsprung, bei dem gegenüberliegend zu der Widerstandsfläche 16 eine kleiner ausgebildete Widerstandsfläche 20 vorgesehen ist. Zwischen den Widerstandsflächen 16 und 20 befindet sich die Anhäufung 18. Die Widerstandsfläche 16 ist in dem kleinen Anstellwinkel α angestellt. Die Widerstandsfläche 20 ist in dem kleinen Anstellwinkel δ angestellt.

Fig. 9 und 10 zeigen eine Ausführungsform eines Vorsprungs 10, der winkelartig ausgebildet ist, und bei dem senkrecht abstehende Widerstandsflächen 21 und 22 im rechten Winkel zueinander angeordnet sind. Hinter den Widerstandsflächen 21 und 22 befinden sich Anhäufungen 23 und 24 aus dem Material des Vorsprunges 10, die allmählich in die Unterseite 9 des Mattenhauptkörpers 6 übergehen. Hier ergibt sich eine winklige Kante 25 zum Eindringen in den textilen Belag 2. Neben diesen hauptsächlichen Widerstandsflächen 21 und 22 sind noch kleinere Widerstandsflächen 26 und 27 vorgesehen.

Die Ausbildungsform des Vorsprunges 10 gemäß den Fig. 11 und 12 ist ganz ähnlich, d. h. ebenfalls winklig aufgebaut, wobei jedoch hier die Widerstandsflächen 21 und 22 durch eine schräg dazu verlaufende Anhäufung 28, die allmählich in die Unterseite 9 des Mattenhauptkörpers 6 übergeht, abgestützt werden.

Die Ausführungsform der Fig. 13 und 14 zeigt einen gezahnt ausgebildeten Vorsprung, bei dem neben der Widerstandsfläche 16 weitere parallel dazu angeordnete Widerstandsflächen 29 und 30 vorgesehen sind. Die Widerstandsflächen 29 und 30 werden zusätzlich zu den Widerstandsflächen 16 und 17 dann wirksam, wenn der Vorsprung 10 tiefer in den textilen Belag 2 eindringt.

Die Fig. 15 und 16 zeigen eine sternförmige Ausbildung eines Vorsprungs, der eine Vielzahl von Widerstandsflächen 31 aufweist, die gleichzeitig gegenseitig Anhäufungen bilden, so daß dieser Vorsprung 10 gegen Umknicken bei Belastung gesichert ist. Sämtliche Widerstandsflächen 31 laufen in einer Spitze 32 zusammen.

Die Ausführungsform gemäß den Fig. 17 und 18 ist T-förmig ausgestaltet. Neben einer Widerstandsfläche 16 und kleineren Widerstandsflächen 17 sind Widerstandsflächen 33 vorgesehen, die gleichzeitig Anhäufungen zur Abstützung der Widerstandsfläche 16 neben den Anhäufungen 18 bilden. Parallel zu der Widerstandsfläche 16 erstreckt sich eine kleine Widerstandsfläche 20. Auch bei dieser T-förmigen Ausbildung des Vorsprungs 10 findet eine gegenseitige Abstützung statt.

Die Vorsprünge 10 können auf der Unterseite 9 ganz unterschiedlich angeordnet werden. Die Fig. 19 und 20 bzw. 21 und 22 zeigen hierfür zwei Beispiele. Gemäß Fig. 19 und 20 sind Vorsprünge 10 in der Ausführungsform der Fig. 9 und 10 zeilen- und reihenweise ausgerichtet, jedoch unterschiedlich orientiert vorgesehen. Fig. 21 und 22 zeigen die Ausbildung eines Vorsprungs gemäß den Fig. 3 und 4, wobei von Reihe zu Reihe jeweils ein Versatz stattfindet. Auch weitere Anordnungsmöglichkeiten sind selbstverständlich denkbar.

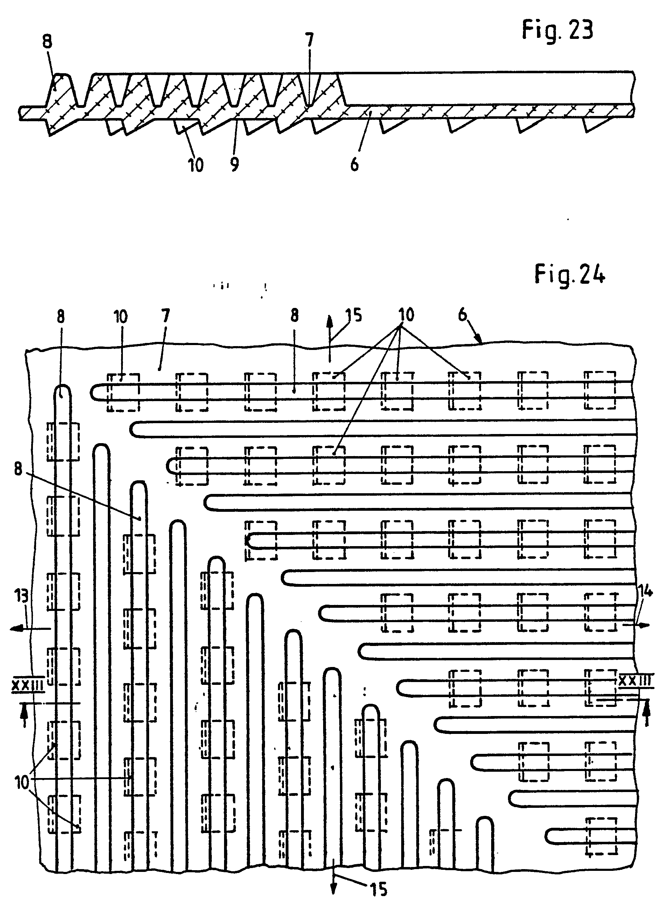

Die Fig. 23 und 24 verdeutlichen, daß die Vorsprünge 10 insbesondere dort auf der Unterseite 9 des Mattenhauptkörpers 6 dort angeordnet sein können, wo sich auf der Oberseite 7 die Erhebungen 8 befinden. Hierdurch wird verursacht, daß die von dem Fuß einer Person eingeleiteten Kräfte sofort von den Erhebungen 8 in die Vorsprünge 10 übergeleitet werden, ohne daß eine nennenswerte Verbiegung und damit Abschwächung der Kräfte im Bereich des Mattenhauptkörpers 6 stattfindet. Dies trägt dazu bei, daß die Vorsprünge 10 besonders tief in den textilen Belag 2 eindringen und sich dort verkrallen, so daß die Haftung bzw. die Rutschsicherheit der Fußraummatte 5 erheblich verbessert wird.

1 = Fahrzeugboden
2 = textiler Belag
3 = elastische Trägerschicht
4 = Textilbeschichtung
5 = Fußraummatte
6 = Mattenhauptkörper
7 = Oberseite
8 = Erhebungen
9 = Unterseite
10 = Vorsprünge
11 = Gewicht
12 = Pfeil
13 = Pfeil

14 = Pfeil
15 = Pfeil
16 = Widerstandsfläche
17 = Widerstandsfläche
18 = Anhäufung
19 = Kante
20 = Widerstandsfläche
21 = Widerstandsfläche
22 = Widerstandsfläche
23 = Anhäufung
24 = Anhäufung
25 = Kante
26 = Widerstandsfläche
27 = Widerstandsfläche
28 = Anhäufung
29 = Widerstandsfläche
30 = Widerstandsfläche
31 = Widerstandsfläche
32 = Spitze
33 = Widerstandsfläche

## Patentansprüche

1. Fußraummatte (5) aus Gummi, Kunststoff o. dgl. zum Auflegen auf textile Bodenbeläge in Kraftfahrzeugen, mit einem Mattenhauptkörper (6), der auf seiner dem textilen Bodenbelag (2) zugekehrten Untersetite eine Vielzahl von in den Bodenbelag zumindest teilweise eindringende Noppen oder anderen vorsprüngen (10) aufweist, die in gegenseitigen Abständen über die Unterseite verteilt angeordnet sind, dadurch gekennzeichnet, daß die Vorsprünge (10) mehrere, etwa senkrecht bzw. nur in kleinen Anstellwinkel (α) geneigt zur Senkrechten auf der Fläche des Mattenhauptkörpers (6) abstehende Widerstandsflächen (16, 17, 20, 21, 22, 26, 27, 29, 30, 31 bzw. 33) aufweisen, die etwa senkrecht zu den Beanspruchungsrichtungen (13, 15) angeordnet sind, und daß die Widerstandsflächen an den Vorsprüngen (10) gegen Umbiegen der Vorsprünge unter Krafteinwirkung durch Anhäufungen (18, 23, 24 bzw. 28) von Vorsprungsmaterial mit allmählichem Übergang in die Unterseite (9) des Mattenhauptkörpers (6) abgestützt sind.

2. Fußraummatte nach Anspruch 1, dadurch gekennzeichnet, daß die Widerstandsflächen (z. B. 16 und 17, 16 und 33 oder 31 und 33) etwa im rechten Winkel zueinander angeordnet sind.

3. Fußraummatte nach Anspruch 1 oder 2, dadurch gekennzeichnet, daß die Vorsprünge (10) einen Flankenwinkel (β) kleiner als 60° zwischen der Widerstansfläche und der Anhäufung von Vorsprungsmaterial und einen kleinen Anstellwinkel (α) - insbesondere kleiner als 10° - aufweisen.

4. Fußraummatte nach einer der Ansprüche 1 bis 3, dadurch gekennzeichnet, daß die Vorsprünge (10) zeilen- und/oder reihenweise ausgerichtet oder versetzt zueinander angeordnet sind.

5. Fußraummatte nach Anspruch 4 dadurch gekennzeichnet, daß auf der Unterseite (9) des Mattenhauptkörpers (6) die Vorsprünge (10) in gleicher Formgebung unterschiedlich orientiert vorgesehen sind.

6. Fußraummatte nach Anspruch 1, dadurch gekennzeichnet, daß die gegen ein Verrutschen der Fußraummatte (5) in Fahrtrichtung (Pfeil 13) schützenden Widerstandsflächen (16, 21, 29, 30 bzw. 31) der Vorsprünge (10) in größerer Anzahl und/ oder mit größerer Einzelfläche gegenüber den anderen Widerstandsflächen (z. B. 17, 22 bzw 33) vorgesehen sind.

7. Fußraummatte nach einem der Ansprüche 1 bis 6, dadurch gekennzeichnet, daß die Vorsprünge (10) stern- oder T-förmig ausgebildet sind, und daß die eine Widerstandsfläche (31 bzw. 16) mit ihrem Vorsprungsmaterial die Abstützung der um 90° versetzt dazu angeordneten anderen Widerstandsfläche (31 bzw. 33) und umgekehrt bildet.

8. Fußraummatte nach Anspruch 1, dadurch gekennzeichnet, daß an einem Vorsprung (10) mehrere parallel zueinander angeordneten Widerstandsflächen (16, 20, 21, 27, 29, 30, bzw. 31) vorgesehen sind, die insbesondere in der Höhe gegeneinander versetzt angeordnet sind.

9. Fußraummatte nach Anspruch 1, dadurch gekennzeichnet, daß die Vorsprünge (10) auf ihrer der Unterseite (9) des Mattenhauptkörpers (6) abekehrten Seite in einer Spitze (32) oder einer Kante (19 bzw. 25) enden.

10. Fußraummatte nach Anspruch 1, dadurch gekennzeichnet, daß die Vorsprünge (10) auf der Unterseite (9) des Mattenhauptkörpers (6) dort angeordnet sind, wo sich auf der Oberseite (7) des Mattenhauptkörpers (6) Rippen oder sonstige Erhebungen (8) befinden.

## Claims

1. Foot area mat (5), made of rubber or plastic, or of some similar material, this foot area mat (5) being designed for placing on textile floor coverings in motor vehicles and having a main body (6) which exhibits a multitude of studs or other projections (10) on its undersurface that faces the textile floor covering (2), these studs or projections (10) penetrating at least partially into the floor covering and being distributed over the undersurface in an arrangement such that they are spaced one from another, characterized in that the projections (10) exhibit a plurality of resistance faces (16, 17, 20, 21, 22, 26, 27, 29, 30, 31 or 33) which stand proud on the surface of the main body (6) of the mat, approximately perpendicularly, or else inclined to the perpendicular at only a small angle of attack (α) and which are arranged approximately perpendicularly to the directions (13, 15) in which loads are applied, and in that the resistance faces on the projections (10) are supported so as to prevent the latter from being bent over when forces act on them, this support being provided by accumulations (18, 23, 24 or 28) of projection material that merge gradually into the undersurface (9) of the main body (6) of the mat.

2. Foot area mat according to Claim 1, characterized in that the resistance faces (e.g. 16 and 17, 16 and 33 or 31 and 33) are arranged in a manner such that they are at approximately right-angles to one another.

3. Foot area mat according to Claim 1 or 2, characterized in that the projections (10) exhibit a flank angle ($\beta$) which is smaller than 60°, between the resistance face and the accumulation of projection material, and an angle of attack ($\alpha$) which is small, and in particular smaller than 10°.

4. Foot area mat according to any one of Claims 1 to 3, characterized in that the projections (10) are ranked in lines and/or rows, or are arranged in a manner such that they are staggered with respect to one another.

5. Foot area mat according to Claim 4, characterized in that all the projections (10) are given the same shape, and are provided in a manner such that they are differently oriented on the undersurface (9) of the main body (6) of the mat.

6. Foot area mat according to Claim 1, characterized in that the resistance faces (16, 21, 29, 30 or 31) which guard against slippage of the foot area mat (5) in the vehicle running direction (arrow 13) are provided in greater abundance than the other resistance faces (e.g. 17, 22 or 33) and/or are provided with a greater individual area than these other resistance faces.

7. Foot area mat according to any one of Claims 1 to 6, characterized in that the projections (10) are made star-shaped or T-shaped, and in that the projection material constituting one of the resistance faces (31 or 16) forms the support of the other resistance face (31 or 33) relative to which it is displaced through 90°, and vice versa.

8. Foot area mat according to Claim 1, characterized in that a plurality of resistance faces (16, 20, 21, 27, 29, 30 or 31) are provided on a projection (10), these resistance faces being arranged so that they are parallel to one another, and staggered with respect to one another, especially heightwise.

9. Foot area mat according to Claim 1, characterized in that on their side which faces away from the undersurface (9) of the main body (6) of the mat, the projections (10) terminate in a point (32) or edge (19 or 25).

10. Foot area mat according to Claim 1, characterized in that the projections (10) on the undersurface (9) of the main body (6) of the mat are located where ribs or other raised features (8) are situated on the upper surface (7) of the main body (6) of the mat.

**Revendications**

1. Tapis de sol (5) en caoutchouc, matière plastique ou matériaux similaires destiné à être placé sur des revêtements de sol textiles dans les véhicules à moteur, comportant une partie principale (6) de tapis, présentant, sur sa face inférieure tournée vers le revêtement de sol (2), un grand nombre de picots ou autres saillies (10) pénétrant au moins partiellement dans le revêtement de sol, et qui sont disposés de façon à être répartis sur la face inférieure avec des écarts réciproques entre eux, caractérisé par le fait que les saillies (10) présentent plusieurs surfaces de résistance (16, 17, 20, 21, 22, 26, 27, 29, 30, 31, respectivement 33) qui s'étendent à peu près perpendiculairement ou avec seulement un léger angle d'attaque ($\alpha$), et qui sont disposées à peu près perpendiculairement aux directions de contrainte (13, 15), et que les surfaces de résistance s'appuient sur les saillies (10) pour éviter la flexion des saillies sous l'effet d'une force, grâce à des épaississements (18, 23, 24, respectivement 28) de matériau de saillie, avec un raccordement progressif sur la face inférieure (9) de la partie principale (6) de tapis.

2. Tapis de sol selon la revendication 1, caractérisé par le fait que les surfaces de résistance (par exemple 16 et 17, 16 et 33 ou 31 et 33) sont disposées approximativement à angle droit l'une par rapport à l'autre.

3. Tapis de sol selon la revendication 1 ou 2, caractérisé par le fait que les saillies (10) présentent un angle de flanc ($\beta$) inférieur à 60 entre les surfaces de résistance et l'épaisseur de matériau de saillie, et un angle d'attaque ($\alpha$) faible - en particulier inférieur à 10°.

4. Tapis de sol selon une des revendications 1 à 3, caractérisé par le fait que les saillies (10) sont alignées en lignes et/ou disposées en colonnes ou décalées les unes par rapport aux autres.

5. Tapis de sol selon la revendication 4, caractérisé par le fait que la face inférieure (9) sur la partie principale (6) de tapis sont prévues des saillies (10) de même forme orientées de façon variée.

6. Tapis de sol selon la revendication 1, caractérisé par le fait que les surfaces de résistance (16, 21, 29, 30, respectivement 31) des saillies (10) qui protègent le tapis de sol (5) contre un glissement dans la direction de marche du véhicule (flèche 13) sont prévues en plus grand nombre et/ou avec des surfaces individuelles plus importantes que les autres surfaces de résistance (par exemple 17, 22, respectivement 33).

7. Tapis de sol selon l'une des revendications 1 à 6, caractérisé par le fait que les saillies (10) ont une forme d'étoile ou de T, et que l'une des surfaces de résistance (31, respectivement 1) forme avec son matériau de saillie l'appui de l'autre surface de résistance (31, respectivement 33) disposée avec un décalage par rapport à celle-ci, et réciproquement.

8. Tapis de sol selon la revendication 1, caractérisé par le fait qu'on prévoit plusieurs surfaces de résistance (16, 20, 21, 27, 29, 30, respectivement 31), qui sont décalées les unes par rapport aux autres, en particulier dans la hauteur.

9. Tapis de sol selon la revendication 1, caractérisé par le fait que les saillies (10) se terminent, de leur côté opposé à la face inférieure (9) de la partie principale (6) de tapis, par une pointe (32) ou par une arête (19 respectivement 25).

10. Tapis de sol selon la revendication 1, caractérisé par le fait que les saillies (10) sont disposées sur la face inférieure (9) de la partie principale (6) de tapis 1 à ou se trouvent, sur la partie supérieure (7) de la partie principale (6) de tapis, des nervures ou d'autres proéminences.

Fig.1

Fig.2

Fig.3

Fig.4

Fig.5

Fig.6

Fig7

Fig.8

0 112 795

Fig. 9

Fig. 11

Fig. 13

Fig. 10

Fig. 12

Fig. 14

Fig. 15

Fig. 17

Fig. 16

Fig. 18

Fig. 19

Fig. 21

Fig. 20

Fig. 22

3

# Fig. 23

# Fig. 24